(19) Europäisches Patentamt
European Patent Office
Office européen des brevets

(11) **EP 4 604 013 A1**

(12) **EUROPEAN PATENT APPLICATION**

(43) Date of publication:
**20.08.2025   Bulletin 2025/34**

(21) Application number: **24158197.4**

(22) Date of filing: **16.02.2024**

(51) International Patent Classification (IPC):
**G06N 3/045** $^{(2023.01)}$          **G06N 3/084** $^{(2023.01)}$
**G06N 3/09** $^{(2023.01)}$

(52) Cooperative Patent Classification (CPC):
**G06N 3/045; G06N 3/084; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Koehler, Jan Mathias
  71229 Leonberg (DE)**
• **Schott, Lukas
  70178 Stuttgart (DE)**
• **Kirchdorfer, Lukas
  91802 Meinheim (DE)**

Remarks:
Amended claims in accordance with Rule 137(2)
EPC.

(54)   **METHOD FOR TRAINING A MULTI-TASK NEURAL NETWORK**

(57)   Some embodiments are directed to training a multi-task neural network. The multi-task neural network is configured to receive an input and to produce multiple outputs. During training task weights are computed to weight individual losses. A normalization function is applied to normalize the task weights.

Fig. 3b

EP 4 604 013 A1

**Description**

Technical Field

The presently disclosed subject matter relates to a method for training a multi-task neural network, a system for training a multi-task neural network, and a computer storage medium.

Background

With the rise of neural networks in various domains, multi-task learning (MTL) has increased in relevance. Multi-task learning (MTL) aims at solving multiple tasks simultaneously in a mutually beneficial manner. MTL allows related tasks to share their knowledge, and thus allows learning to be done more efficiently. Furthermore, MTL increases the amount of available training data [3, 29, 33].

One of the major challenges is to find the right, implicit or explicit, balance between individual tasks to gain a good performance across tasks. An effective approach provides task-specific weights during optimization.

Not explicitly weighting tasks, also termed Equal Weighting (EW), has many potential pitfalls. Different tasks could be measured on various scales, such as meters and millimeters, which could lead to drastically different loss scalings across tasks. Furthermore, some tasks might be more difficult than others and require more resources. Thus, there have been various proposals for specialized weighing methods that dynamically adjust the weights along the course of training [21, 7, 15, 37, 20, 16, 2, 4, 22, 6].

Uncertainty Weighting (UW) [16] is a gradient-based multi-task optimization (MTO) approach. In UW, the task weights are learned using gradient descent. However, UW also shows some drawbacks: First, we observe that UW can be affected by bad initialization and inertia. As uncertainty weights are usually initialized equally for all tasks, reaching their task- and epoch-specific optimal value via gradient descent might be slow, especially as task weights often differ in orders of magnitude. We refer to this phenomenon as update inertia. We have demonstrated this phenomenon empirically. Furthermore, we observed that UW is prone to overfitting.

Another approach to obtaining task weights is using a brute force grid search for optimal fixed weights, called Scalarization. Scalarization yields superior performance on a range of MTL problems. Loss weights are tuned by performing an extensive grid search, which is however computationally expensive. Scalarization can only be applied to problems with a small number of tasks, as the combinatorial complexity becomes prohibitive. The high computational cost makes the method inapplicable in many practical scenarios.

Summary

It would be advantageous to have an improved method for training a multi-task neural network, in particular to compute task weights.

In an embodiment, the multi-task neural network is configured to receive an input and to produce multiple outputs, the multi-task neural network input comprising dimensional data obtained from a sensor. In an embodiment, computing task weights comprises applying a normalization function, so that the task weights are normalized. For example, one may first compute raw task weights, and then normalize the raw task weights by applying the normalization function. This can be done while iterating over the training set.

In an advantageous way to compute the raw task weights, they are chosen to scale the corresponding multiple individual losses to a constant. For example, the task weights $\omega_i$ may be chosen proportional to $1/L_i$, so that $\omega_i L_i$ is a constant, e.g.,. is 1. This also means that the total loss $L = \Sigma_i \omega_i L_i$ is a constant, e.g.,. equals the number of tasks. This can be done for each training batch.

The multi-task neural network is particularly useful in situations in which multiple information needs to be extracted from the same data. For example, the input data may represent a real-world environment of a mechanical agent, e.g., a robot or vehicle, operating in the environment. The input data may contain multiple input modalities. Given such information, there are various information that may need to be extracted, e.g., object segmentation, object classification, distance estimation, and so on. The multi-task neural network may be trained to infer a state of the environment. A similar problem arises when deriving a state of the mechanical agent; here the input may contain various data that represent the state of the agent.

In an embodiment, an analytically optimal uncertainty solution is computed, which is particularly strong in scenarios with highly imbalanced losses. In an embodiment, Soft Optimal Uncertainty Weighting (UW-SO) normalizes this optimal solution with a normalization function, e.g., a softmax function with a temperature parameter. An extensive set of experiments were run across various loss weighting methods with different datasets and architectures.

A device configured to train a multi-task neural network according to an embodiment is an electronic device, e.g., a computer.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Brief Description Of Drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a system for training a multi-task neural network,
Figure 1b schematically shows an example of an embodiment of a system for evaluating a multi-task neural network,
Figure 2 schematically shows an example of an embodiment of training set,
Figure 3a schematically shows an example of an embodiment of multi-task neural network,
Figure 3b schematically shows an example of an embodiment of training a multi-task neural network,
Figure 4a schematically shows an example of weight ratio development for an embodiment of training a multi-task neural network,
Figure 4b schematically shows an example of loss development for an embodiment of training a multi-task neural network,
Figure 5 schematically shows an example of performance for different choices of T in an embodiment,
Figure 6a schematically shows an example of task weight development for a segmentation task in an embodiment,
Figure 6b schematically shows an example of task weight development for a depth task in an embodiment,
Figure 6c schematically shows an example of task weight development for a normal task in an embodiment,
Figure 7 schematically shows an example of an embodiment of a method for training a multi-task neural network,
Figure 8a schematically shows a computer readable medium having a writable part comprising a computer program according to an embodiment,
Figure 8b schematically shows a representation of a processor system according to an embodiment.

Reference Signs List

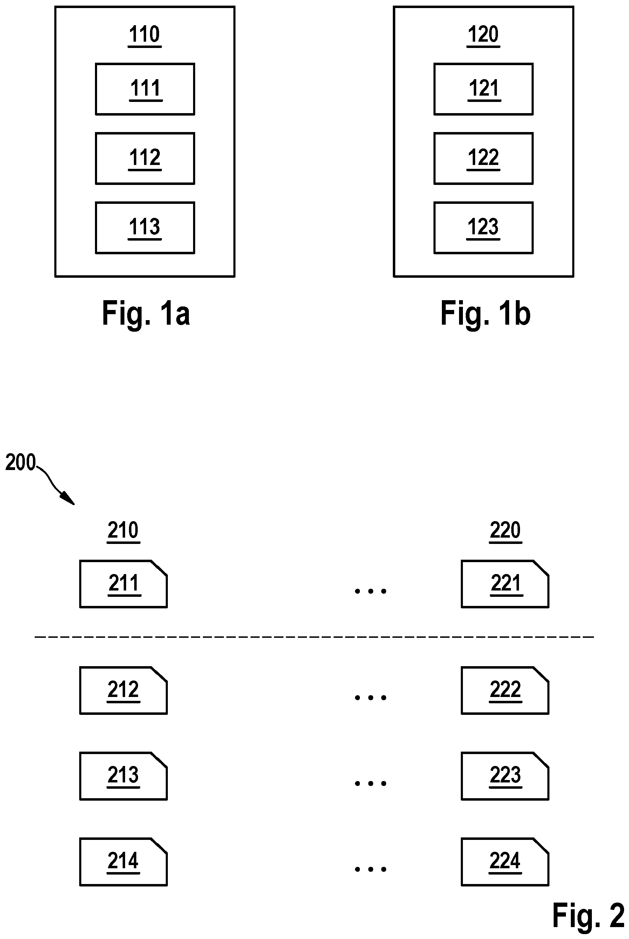

The following list of references and abbreviations corresponds to figures 1-6c, 8a-8b, and is provided for facilitating the interpretation of the drawings and shall not be construed as limiting the claims.

| | |
|---|---|
| 110 | a training system for training a multi-task neural network |
| 120 | an evaluating system for evaluating a multi-task neural network |
| 111, 121 | a processor system |
| 112, 122 | storage |
| 113, 123 | communication interface |
| 200 | a training set |
| 210, 220 | a training pair |
| 211, 221 | a training input |
| 212-214 | multiple training outputs |
| 222-224 | multiple training outputs |
| 301 | an input |
| 321-323 | a task-specific head |
| 331-333 | a task-specific output |
| 341-343 | a task-specific loss |
| 350 | a raw task weights unit |
| 351-353 | a raw task weight |
| 360 | normalization function |
| 361-363 | a task weight |

| 370 | a weighted loss unit |
| 380 | a learning unit |
| 411 | Uncertainty Weighting |
| 412 | Soft Optimal Uncertainty Weighting |
| 413 | Equal Weighting |
| 421 | Uncertainty Weighting Train |
| 422 | Uncertainty Weighting Test |
| 423 | Soft Optimal Uncertainty Weighting Train |
| 424 | Soft Optimal Uncertainty Weighting Test |
| 611 | Scalar |
| 612 | Equal Weighting |
| 613 | Uncertainty Weighting |
| 614 | Geometric Loss Strategy |
| 615 | Impartial Multi-Task Learning |
| 616 | Optimal Uncertainty Weighting |
| 617 | Soft Optimal Uncertainty Weighting |
| | |
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

Description Of Embodiments

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1a** schematically shows an example of an embodiment of a system 110 for training a multi-task neural network. **Figure 1b** schematically shows an example of an embodiment of a system 120 for evaluating a multi-task neural network.

Training system 110 is configured to train a multi-task neural network. The multi-task neural network is configured to receive an input ($x$) and to produce multiple outputs ($y_1, y_2, ..., y_k$).

Training system 110 repeatedly evaluates the multi-task neural network for a training input to obtain multiple outputs of the multi-task neural network; one output for each task of the neural network. Accordingly, for each of the tasks a loss may be computed that indicates how well the multi-task neural network performed on that task. Using those losses directly for training the network does not work well. The losses may be on different scales, which could lead to drastically different loss scalings across tasks.

Accordingly, training system 110 first computes raw task weights based on the multiple individual losses, and then applies a normalization function thereto. The normalized task weights are then used to weight the task specific losses, which in turn are used to train the network.

Evaluating system 120 is configured to evaluate the trained multi-task neural network. For example, training system 110 may transfer the trained multi-task neural network to evaluating system 120. For example, system 120 may be an autonomous vehicle using the trained multi-task neural network to evaluate sensor data; system 120 may use one, or more, or all of the outputs to derive a control signal to control the autonomous vehicle, e.g., an actuator thereof.

The computer code for evaluating neural network may be shared between training system 110 and evaluating system 120 in large part. If evaluating system 120 is not configured for further training the neural network, then evaluating system 120 does not need code to compute task weights. Furthermore, although not strictly necessary, training system 110 will typically compute all outputs of the multi-task neural network for each training input. Evaluating system 120 may do the same, but may also be configured to only compute a desired output of the multiple possible outputs, thus saving on computing resources.

System 110 and/or system 120 may be implemented in a single device, e.g., a computer. They may also be implemented as a distributed system, e.g., geographically distributed, the parts of a system communicating through a computer network.

Typically, systems 110 and 120 are different systems. However, it is possible to use the same system for both. For example, a system may be configured for a training phase, during which it acts as system 110, and for an inference phase, during which it acts as system 120.

Training system 110 may comprise a processor system 111, a storage 112, and a communication interface 113. Evaluating system 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power such as a volatile memory device, e.g., a Random Access Memory (RAM). For example, storage 112 and/or 122 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

The systems 110 and 120 may communicate internally, with each other, with other systems, external storage, input devices, output devices, and/or one or more sensors over a computer network. The computer network may be an internet, an intranet, a LAN, a WLAN, a WAN, etc. The computer network may be the Internet. The systems 110 and 120 may comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., to receive training data, and/or to send the trained neural network, e.g., the trained parameters thereof. The communication interface 123 may be used to send or receive digital data, e.g., to receive the trained network, to receive an input, and/or to send an output, or data derived from an output.

Training system 110 and evaluating system 120 may have a user interface, which may include well-known elements such as one or more buttons, a keyboard, display, touch screen, etc. The user interface may be arranged for accommodating user interaction for, e.g., initiating a training or an evaluating.

The execution of systems 110 and 120 may be implemented in a processor system. The systems 110 and 120 may comprise functional units to implement aspects of embodiments. The functional units may be part of the processor system. For example, functional units shown herein may be wholly or partially implemented in computer instructions that are stored in a storage of the system and executable by the processor system.

The processor system may comprise one or more processor circuits, e.g., microprocessors, CPUs, GPUs, etc. Systems 110 and 120 may comprise multiple processors. A processor circuit may be implemented in a distributed fashion, e.g., as multiple sub-processor circuits. For example, systems 110 and 120 may use cloud computing.

Typically, the training system 110 and the evaluating system 120 each comprise one or more microprocessors which execute appropriate software stored at the system; for example, that software may have been downloaded and/or stored in a corresponding memory, e.g., a volatile memory such as RAM or a non-volatile memory such as Flash. Instead of using software to implement a function, the systems 110 and 120 may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, training system 110 and server 120 may comprise circuits, e.g., for cryptographic processing, and/or arithmetic processing.

In hybrid embodiments, functional units are implemented partially in hardware, e.g., as coprocessors, e.g., neural network coprocessors, and partially in software stored and executed on the system.

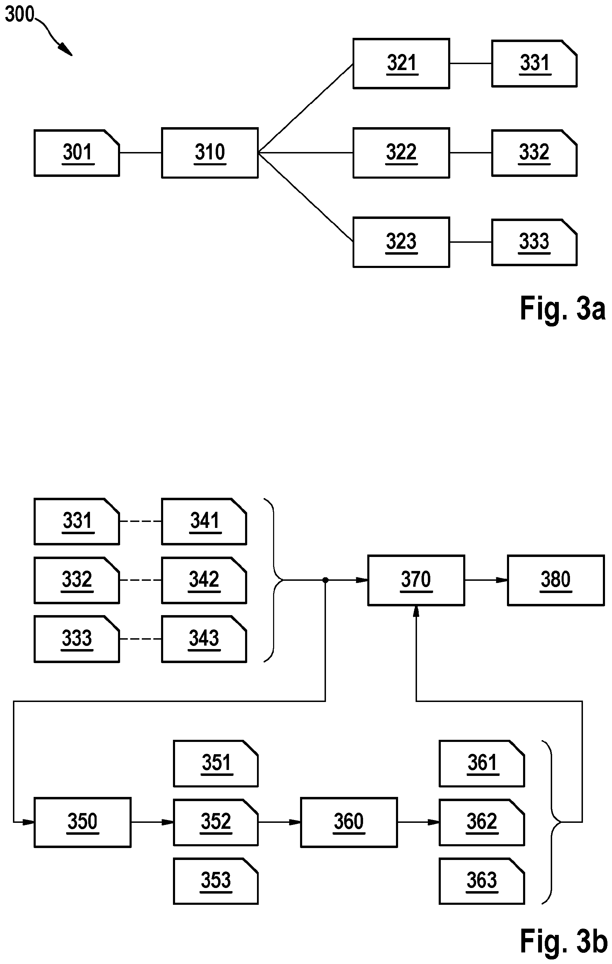

**Figure 3a** schematically shows an example of an embodiment of multi-task neural network 300. Figure 3a shows one possible architecture for a multi-task neural network. The multi-task neural network is configured to receive an input 301, also referred to as x, and to produce multiple outputs. Shown are outputs 331, 332, and 333. The outputs are also referred to as $y_1, y_2, ..., y_k$. The number of outputs, that is, the number of tasks, could be two, or more than three, e.g., at least 4, at least 10, etc.

Accordingly, various outputs are computed for a single input. Note that input 301 typically comprises a mixture of input data types. For example, a single input may comprise one, or two, or more of: images, radar signals, lidar signals, ultrasound signals, etc., to produce the multiple outputs.

In the architecture shown in figure 3a, the multi-task neural network comprises a shared backbone 310 and multiple task-specific heads. Shown are task-specific heads 321, 322 and 323. Shared backbone 310 receives the input 301 and produces an intermediate result which is provided to each one of the task-specific heads. Each task-specific head computes one of the output of multi-task neural network 300. The task-specific heads do not need to be of the same size, e.g., may have a different number of layers. For example, a head that produces an object segmentation or a depth map may have more layers than a layer that classifies an image.

The architecture of figure 3a is an example of hard parameter sharing, in which one or more network layers are shared across all tasks, in this case the lower-level layers. The network has multiple task-specific heads, each of which may comprise one or more layers, whose parameters are not shared. The shared layers capture and learn features that are common across the tasks, leveraging the underlying similarities. Meanwhile, the task-specific layers allow the model to fine-tune these shared features for their particular task.

Instead of one backbone 310 shared across all tasks a more complicated architecture is possible. For example, some layers may be shared across all tasks, while one or more other layers may be shared over a subset of the tasks. Such an architecture allows for a high degree of flexibility and adaptability, promoting further parameter efficiency

Instead of hard sharing of parameters, all or part of the shared parameters may be soft shared. In an embodiment using this approach, the model comprises a module, e.g., a neural network, for each individual task; the module having its own set of parameters. Part of the modules are soft shared parameters, e.g., parameters of certain layer(s), e.g., one or more lower layers of the modules. The modules are then regularized to encourage their shared parameters to be similar. This regularization allows the tasks to learn from each other without being forced to share the exact same feature representations. This may be achieved by adding a regularization term to the loss function, which penalizes the distance between the parameter matrices of the different tasks' modules.

For example, the architecture shown in figure 3a may be adjusted by duplicating the backbone 310 for each task; obtaining three copies of backbone 310 one for each head. The three backbones are trained individually, but are regularized to be close to each other. Losses used for training each combination of backbone and head may still be weighted by a task weight according to an embodiment.

The embodiments shown herein focus on a backbone/task-specific head architecture with hard shared parameters. However, embodiment can be adjusted to other options, e.g., soft shared parameters.

The neural network may comprise a variety of neural network layers, e.g., one or more of attention layers, including self-attention layers, encoding layers, decoding layer, convolutional layers, normalization layers, activation layers, e.g., ReLu, and so on.

## Inputs/Outputs

In an embodiment, the multi-task neural network input, e.g., input 301 comprises dimensional data obtained from a sensor, that is, data having one dimension or more. The dimensional data in the input may be one-dimensional, e.g., audio data, temperature data, pressure data, time sequence data, etc. The dimensional data in the input may be two-dimensional, e.g., image data, including visible light image data and infrared image data, radar signals, lidar signals, ultrasound signals, etc. The dimensional data in the input may be three-dimensional, e.g., volumetric data, such as medical imaging data from MRI or CT scans, 3D models, e.g., computer-aided design (CAD) models, and virtual reality environments. The dimensional data in the input may be four-dimensional, e.g., spatiotemporal data, which includes three spatial dimensions plus one time dimension, such as video data that captures movement over time, or 4D medical imaging that provides 3D spatial reconstruction over time. In an embodiment, input 301 may comprise, or comprise also, scalar data, e.g., zero-dimensional data, e.g., sensor measurements.

The input data may comprise multi-dimensional image data, e.g., to two-dimensional (2D), three-dimensional (3D) or four-dimensional (4D) images, acquired by various acquisition modalities such as, but not limited to, standard X-ray Imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM).

In an embodiment, the image data comprises one or more of: audio data, image data, video data, lidar data, radar data, infrared data, ultrasonic data, sensor data, temperature data, pressure data, electrophysiological recording, e.g., electrocardiography (ecg), electroencephalography (eeg), and/or electromyography (emg) data.

The output data depends on the particular task. The output data may include the same gamut of data types as the input data. For example, the output may include dimensional data, such as indicated above. The output may include scalar data, e.g., a classification of the input. An output may be a binary value.

For example, in an embodiment, the input data comprises image data, and possibly additional data. The multi-task neural network may have one output that classifies an object in the image data, one output with estimated depth for the image data, e.g., a depth map, and one output that comprises an object segmentation for the image data. Having only two of these outputs, e.g., only the object segmentation and estimated depth, is possible. Having more outputs is also possible.

In an embodiment, the input data represents a real-world environment of a mechanical agent, e.g., a robot or vehicle, operating in the environment. The mechanical agent may operate autonomously or semi-autonomously. The multi-task neural network may be trained to infer a state of the environment and/or of the mechanical agent.

After training the multi-task neural network may be used to operate the mechanical agent. For example, an input obtained from one or more sensors, e.g., cameras, radar, vehicle sensors, and the like, representing the environment and/or the state of the vehicle is provided and multiple outputs are computed therefrom by evaluating the neural network for the input. A control function is derived from one or more of the multiple outputs of the multi-task neural network. The control function is to be executed by the mechanical agent interacting with the real-world environment. A control function may include: actuating the vehicle, e.g., accelerating, decelerating, emergency braking, changing course, etc.

In an embodiment, a semi-autonomous or autonomous vehicle, e.g., a car, comprises a multi-task neural network configured to receive as input various inputs for the purpose of environment perception, decision making, and control signal generation. The network receives dimensional data obtained from a sensor or a combination of two or more dimensional data obtained from multiple sensors. The inputs to the multi-task neural network include, but are not limited to, camera images, which provide visual information about the environment, such as road conditions, traffic signs, and obstacles, lidar data, and/or radar signals. The input may also include IMU (Inertial Measurement Unit) data for accurate positioning of the vehicle. The multiple outputs of the multi-task neural network may include, but are not limited to, object detection and classification, e.g., identifying and categorizing obstacles, vehicles, pedestrians, etc., lane detection, e.g., identifying lane boundaries for lane-keeping and lane-changing maneuvers, and distance estimation, e.g., assessing the proximity of objects, e.g., to maintain safe following distances. The network may produce vehicle dynamics predictions, such as the vehicle's potential future position and speed.

In an embodiment, the input comprises medical data, and the multiple outputs represent medical information derived from the medial input data. For example, tasks of the multi-task neural network may include: anatomical structure segmentation, such as, e.g., tumors, organs, and blood vessels; tumor detection and characterization, e.g., distinguishing between benign and malignant types based on imaging characteristics; functional analysis, e.g., evaluating the function of specific organs or systems, for example, measuring blood flow in cardiac imaging or assessing metabolic activity in PET scans.

For example, in an embodiment the input comprises Cardiac Magnetic Resonance Imaging (Cardiac MRI). Tasks of the multi-task neural network may include: Cardiac Structure Segmentation, e.g., segmenting the heart into its major components, such as the left ventricle, right ventricle, myocardium (heart muscle), and the atria; Myocardial Tissue Characterization, e.g., Differentiating between healthy and diseased myocardial tissue, such as identifying areas of fibrosis or infarction; Function Analysis : Analyzing the functional aspects of the heart, such as ejection fraction, cardiac output, and myocardial strain, blood flow quantification, e.g., in the cardiac chambers; Detection of Cardiac Abnormalities, e.g., congenital heart defects, diseases, e.g., coronary artery disease.

**Figure 3b** schematically shows an example of an embodiment of training multi-task neural network, e.g., neural network 300.

To train the network a training set is obtained. The training set comprises multiple training pairs of a training input and corresponding multiple training outputs. **Figure 2** schematically shows an example of an embodiment of training set 200. Set 200 comprises multiple training pairs of a training input and corresponding multiple training outputs. Figure 2 shows two training pairs: pair 210 and pair 220. Typically, a training data set will comprise many more training pairs, e.g., over more than 1000, or more than 10000, or more than 100000.

Figure 2 shows inputs, shown are: inputs 211 and input 221. Note that a single input may comprise multiple different data types, e.g., multiple camera images, in addition to radar and/or lidar data. For each input, the expected output for each task of the multi-task neural network is provided. For example, given the input data 211, the outputs 212, 213 and 214 are expected; given the input data 221, the outputs 222, 223 and 224 are expected;

For example, using the architecture of figure 3a, the task specific heads 321, 322 and 323 are expected to produce 212, 213 and 214 respectively, if backbone 310 receives input 301.

Typically, each training pair comprises one input, and one output for each task. This is not necessary. Some training pairs may comprise a training input, yet may comprise a training output for fewer than all tasks. Embodiments herein assume all training pairs are full training pairs, however an embodiment may be adjusted by computing losses and task weights only for outputs present in a training pair.

During training, an iterating is made over the training set. To train on a training pair of the training set, the multi-task neural network is evaluated for the training input in the training pair. For example, given input 301, one may obtain outputs 331, 332, and 333. Typically, during training not all outputs will be correct. Accordingly, for each output a loss may be computed. Each individual loss of the multiple individual losses indicating a difference between the output of the multi-task neural network and the corresponding training outputs of the multiple training outputs. Various conventional loss functions may be used for this purpose.

For instance, for a task of object detection in a camera images, the loss function may be the cross-entropy loss for classifying the types of objects, e.g., vehicles, pedestrians, etc. A task of distance estimation to objects, e.g., using the same camera images as input, may use a mean squared error (MSE) loss function, to quantify the difference between the predicted distances and the true distances.

Accordingly, the input 301 gives rise to (in this example) three outputs 331, 332, 333, and three corresponding losses: loss 341, loss 342, and loss 343, respectively. To balance the learning of the three tasks, task weights are computed to weight the losses. For example, a weighted loss unit 370 may weigh the individual losses, e.g., losses 341-343, using task weights 361-363. A learning unit 380 then uses the weighted losses to train the neural network. The training may use a conventional training algorithm, e.g., back propagation or one of its variants. For example, the training may train each of the heads using the corresponding weighted loss. The training preferably includes training the backbone 310, e.g., as part of training each of the task heads.

### Task weights

Using the individual losses a raw task weights unit 350 may compute raw task weights from the multiple individual losses. The inventors found that applying a normalization function to the raw task weights improves the training.

Typically, the raw task weights are computed only from the individual losses, but this is not necessary, further factors may be taken into account. For example, additional factors that may be taken into account to compute the raw task weight may include one or more of: Task Importance, e.g., the relative importance of each task can be a factor. For example, in a semi-autonomous vehicle scenario, the task of detecting pedestrians may be assigned a higher importance than lane detection; Data imbalance. For example, if one task has more training data than another, the training may be adjusted to give more emphasis to a task with less data.

Computing task weights may use any conventional method of computing raw task weights. The inventors found that one particularly advantageous method of computing task weights is to use the inverse of the losses. This has the effect of scaling the losses to a constant. For example, given individual losses $(L_1, L_2, ..., L_k)$ for the obtained multiple outputs of the multi-task neural network, the raw task weights $(\omega_1, \omega_2, ..., \omega_k)$, may be computed as $\omega_i = \gamma/L_i$, for all $i$ and a fixed positive scalar $\gamma$, e.g., $\gamma = 1$.

To obtain the task weights from the raw task weights a normalization function is applied, e.g., $(\omega_1, \omega_2, ..., \omega_k) \rightarrow$ *Normalize*$(\omega_1, \omega_2, ..., \omega_k)$. In an embodiment, the normalization function is a probability distribution function; the outputs of the normalization function being numbers from 0 to 1, that sum to 1. For example, the normalization function may be SoftMax, Temperature-Scaled SoftMax [38], soft-margin SoftMax [39], Taylor SoftMax [40], or any combination thereof.

Note that, although the task weights are computed from the individual losses, the task weights are not taken into account for computing gradients, apart from the scaling. This may be implemented by applying a so-called stop gradient operator to the multiple task weights.

### Batching

In an embodiment, the iteration over the training set is batched. A batch of training input and output pairs may be collected from the training data. The same, partially trained, multi-task neural network may be evaluated for the training data in the batch. The parameters of the multi-task neural network may be adjusted based on the aggregated computed individual losses weighted by the task weights. The adjusted multi-task neural network may then be used for the next training batch. Various batch sizes may be used, e.g., at least 2, at least 16, at least 32, etc. A batch size of 1 corresponds to updating after each training pair.

For example, the following pseudocode could be used

```
FOR each batch i DO
        Get the current state of the neural network: NN_i
        Select a batch of training inputs (e.g., inputs 1 to 32)
        FOR each training input j in the batch DO
                Compute the set of losses for input j using NN_i: L_j = (L1_j,
L2_j, ..., Lk_j)
        END FOR


        Calculate the average loss for each task: L_avg = (L1_avg, L2_avg, …,
Lk_avg)
        Compute raw task weights from averaged loss: E.g., Raw_Task_weights =
( 1/ L1_avg, …, 1/ Lk_avg)
        Normalize raw task weights to obtain task weight. E.g., Task_weights
= SoftMax ( Raw_Task_weights)


        Apply Task_weights to L_avg to obtain loss for the batch and use it
for backpropagation. Thus updating the neural network state to NN_i+1
        END FOR
```

Below several further optional refinements, details, and embodiments are illustrated. Some embodiments are further detailed using a mathematical notation.

In MTL, we aim to resolve $K$ tasks for some input data point $x \in X$. For this, $x$ is mapped to labels $\{y_k \in Y_k\}_{k \in [1,K]}$ simultaneously using specific mappings $\{f_k : X \to Y_k\}$. We assume hard task-shared parameters $\theta$ in a hydra-like neural network architecture. This means all tasks receive the same intermediate feature $z = f(x; \theta)$ from the shared backbone and each task head yields output $f_k(x) = f'_k(z; \theta_k)$ with task-specific parameters $\theta_k$ [29]. However, other architectures for multi-task neural network may be used instead.

The network is trained by considering all tasks' losses $L_k$. Naively summing up these losses typically leads to imbalanced learning as tasks, wherein a high loss magnitude might dominate the training. The goal is thus to find improved task weights $\omega_k$, possibly dynamic task weights, for all tasks to optimize the loss $L = \Sigma_k \omega_k L_k$ in a way that all tasks benefit w.r.t. their final performance metrics.

Some embodiments are directed to training a multi-task neural network, wherein during training task weights are computed to weight individual losses. A normalization function is applied to normalize the task weights.

A first loss weighting method UW-O (Optimal Uncertainty Weighting) computes weights based on an analytical solution, instead of, e.g., learning weights using gradient descent as in UW [16]. The UW-O method does not apply a normalizing function. A second loss weighting method UW-SO (Soft Optimal Uncertainty Weighting) normalizes the analytically optimal weights using a normalizing function. We will assume a softmax function, though other normalizing functions may be used.

UW-O: Analytical solution

In the approach of [16] weights losses are based on task-specific aleatoric uncertainty. The exact weighting formula depends on the type of loss. For instance, for tasks with an $L_1$ loss it can be derived by assuming a Laplace posterior distribution and identifying $\sigma_k$ with the uncertainty of each task $k \in \mathcal{K}$, treating them as learnable parameters that are input independent

$$L = \sum_{k \in \mathcal{K}} \frac{1}{\sigma_k} L_k + \log \sigma_k. (1)$$

Here, $L_k$ is the task-specific loss, e.g., a mean absolute error. Intuitively, the $\sigma_k$ in the first term allows to down-weight difficult tasks by increasing the uncertainty represented by $\sigma_k$. The second term acts as a regularizer and prohibits the trivial solution of $\sigma_k \to \infty$.

Instead of learning $\sigma$, we derive the analytically optimal solution and show its derivation. For example, for $L_1$ loss the objective for tasks with an $L_1$ loss can be formulated as $\min_{\sigma_k} L$, see, e.g., [16], where we minimize the UW loss function with respect to $\sigma_k$. Taking the derivative and solving for $\sigma_k$ results in an analytically optimal solution:

$$\sigma_k = L_k \quad (2)$$

Replacing $\sigma_k$ with its analytical solution $L_k$ in the total loss function (Eq. 1) gives the following loss:

$$L = \sum_{k \in \mathcal{K}} \frac{1}{sg[L_k]} L_k + \log sg[L_k]$$

, where we denote $sg$ as the stopgradient operator to avoid zero gradients of the network updates. Since we do not compute any gradient of the second part of the loss, we can simplify the term, such that

$$L = \sum_{k \in \mathcal{K}} \frac{1}{sg[L_k]} L_k. \qquad (3)$$

For example, UW-O performs better than [16] especially in applications when task losses $L_k$ differ significantly in magnitude, as each loss is normalized by $sg[L_k]$, canceling out any large scale difference in individual losses $L_k$. Furthermore, UW-O mitigates the initialization / inertia

problem of approaches that learn task weights, such as in [16], or [21].

UW-O does not include a normalization function. An example of computer-implemented method (400) for training a multi-task neural network using UW-O is the following method:

A computer-implemented method (400) for training a multi-task neural network, the multi-task neural network being configured to receive an input ($x$) and to produce multiple outputs ($y_1, y_2, ..., y_k$), the multi-task neural network input comprising dimensional data obtained from a sensor, the method comprising

- obtaining (410) a training set, the training set comprising multiple training pairs of a training input and corresponding multiple training outputs,
- iterating (420) over the training set, comprising, for a training pair of the training set

  - evaluating (421) the multi-task neural network for the training input in the training pair, thus obtaining multiple outputs of the multi-task neural network,
  - computing (422) multiple individual losses ($L_1, L_2, ..., L_k$) for the obtained multiple outputs of the multi-task neural network, each individual loss of the multiple individual losses indicating a difference between the output of the multi-task neural network and the corresponding training outputs of the multiple training outputs,
  - computing (423) task weights ($\omega_1, \omega_2, ..., \omega_k$), comprising computing task weights from the multiple individual losses, wherein the multiple task weights are chosen to scale

  the corresponding multiple individual losses to a constant (*e. g.*, $\omega_i L_i = 1$),

  - adjusting (424) parameters of the multi-task neural network based on the computed individual losses weighted by the task weights.

UW-SO: Transformation of UW-O with normalization

Although an embodiment according to UW-O, e.g., as defined above performs well in some cases, e.g., scenarios with imbalanced losses, nevertheless, UW-O does not reliably outperform [16], or [21] across all datasets and architectures.

To challenge not only UW but even the high-performing Scalarization approach, we additionally propose UW-SO. Experimental results confirm the effectiveness of tuning task weights that sum to 1, e.g., by applying a normalization function. For example, the softmax function may be applied to UW-O (Eq. 3), yielding UW-SO:

$$L = \sum_{k \in \mathcal{K}} \frac{exp(\frac{1}{sg[L_k]}/T)}{\sum_{j \in \mathcal{K}} exp(\frac{1}{sg[L_j]}/T)} L_k, \quad (4)$$

UW-SO achieves strong results while overcoming the inherent computational cost dependency on the number of tasks of scalarization.

In formula (4) we denote $T$ as the softmax temperature, with a higher value of $T$ resulting in more evenly distributed task weights with $\sum_{k \in \mathcal{K}} \omega_k = 1$. Contrary to Scalarization which requires the tuning of $\mathcal{K}$ task weights, thus being infeasible for a large number of tasks, our novel method UW-SO requires only tuning of one hyperparameter $T$.

In this section, we provide more details on the analytically optimal derivation of the uncertainty-based task weights. Note that the analytical solution to UW, which we call UW-O, varies for different loss criteria (e.g., $L_2$ and Cross-Entropy Loss yield a different constant in the denominator compared to $L_1$). However, we simplify this by taking a unified formula (see Eq. 3) not depending on the kind of task. This reduces the implementation overhead. Empirically, we further saw improvements in the results due to the unification.

Nevertheless, we show the detailed derivation of UW-O for $L_1$, $L_2$, and Cross Entropy Loss in the following paragraphs.

**L1 loss**

In the case of regression tasks evaluated by the $L_1$ loss we define our likelihood as a Laplace distribution, thus, the objective is given as [16]

$$\min_{\sigma_k} \frac{1}{\sigma_k} L_k + \log \sigma_k, \qquad (5)$$

where we minimize the UW loss function with respect to $\sigma_k$ with k representing the k-th task weighted by $\sigma_k$. Taking the derivative and solving for $\sigma_k$ results in an analytically optimal solution:

$$\frac{\partial}{\partial \sigma_k} \frac{1}{\sigma_k} L_k + \log \sigma_k = -\frac{1}{\sigma_k^2} L_k + \frac{1}{\sigma_k} (6)$$

$$-\frac{1}{\sigma_k^2} L_k + \frac{1}{\sigma_k} \overset{!}{=} 0 \, (7)$$

$$\sigma_k = L_k \, (8)$$

We assume $\sigma_k$ to be positive and therefore only allow for positive losses.

Replacing $\sigma_k$ with its analytical solution $L_k$ in the total loss function gives the following loss:

$$L_{weighted} = \frac{1}{sg[L_k]} L_k + \log\left(sg[L_k]\right), \qquad (9)$$

where we denote *sg* as the stopgradient operator to avoid zero gradients of the network updates. Since we do not compute any gradient of the second part of the loss, we can simplify the term, such that

$$L_{weighted} = \frac{1}{sg[L_k]} L_k. \qquad (10)$$

To show that UW-O is indeed unaffected of loss scalings, we can assume task-specific weights $\omega_k$ in the loss function. However, these weights cancel out, making UW-O very effective for scenarios with highly imbalanced losses, as also our experiment show.

$$L_{weighted} = \sum_{k \in \mathcal{K}} \frac{1}{\omega_k sg[L_k]} \omega_k L_k = \sum_{k \in \mathcal{K}} \frac{1}{sg[L_k]} L_k \qquad (11)$$

**L2 loss**

The objective in UW for regression tasks with an $L_2$ loss can be formulated as [16]

$$\min_{\sigma_k} \frac{1}{2\sigma_k^2} L_k + \log\sigma_k, \qquad (12)$$

Consequently, our derivation and total loss again change:

$$\frac{\partial}{\partial\sigma_k}\frac{1}{2\sigma_k^2}L_k + \log\sigma_k = -\frac{1}{\sigma_k^3}L_k + \frac{1}{\sigma_k} \qquad (13)$$

$$-\frac{1}{\sigma_k^3}L_k + \frac{1}{\sigma_k} \overset{!}{=} 0 \qquad (14)$$

$$\sigma_k = \pm\sqrt{L_k} \qquad (15)$$

$$L_{weighted} = \frac{1}{2sg[L_k]}L_k + \log\sqrt{sg[L_k]} \qquad (16)$$

$$L_{weighted} = \frac{1}{2sg[L_k]}L_k. \qquad (17)$$

**Cross-Entropy Loss**

The derivation for classification tasks evaluated by the cross-entropy loss looks as follows:

$$\min_{\sigma_k} \frac{1}{\sigma_k^2}L_k + \log\sigma_k \qquad (18)$$

$$\frac{\partial}{\partial\sigma_k}\frac{1}{\sigma_k^2}L_k + \log\sigma_k = -\frac{2}{\sigma_k^3}L_k + \frac{1}{\sigma_k} \qquad (19)$$

$$-\frac{2}{\sigma_k^3}L_k + \frac{1}{\sigma_k} \overset{!}{=} 0 \qquad (20)$$

$$\sigma_k = \pm\sqrt{2L_k} \qquad (21)$$

$$L_{weighted} = \frac{1}{2sg[L_k]}L_k \qquad (22)$$

Surprisingly, it turns out, that in each of these cases, task weights are obtained that scale the corresponding multiple individual losses to a constant *(e. g., $\omega_i L_i$ = 1)*. Using these task weights directly works especially well in scenarios with highly imbalanced losses. However, in each of these scenarios, a normalization factor may be added to normalize the task weights.

**Test results**

We compare our methods to the most common loss weighting approaches.

**Datasets** We use three common computer vision MTL datasets: two datasets for scene understanding - *NYUv2* [27] and *Cityscapes* [8] - and a binary attribute dataset *CelebA* [23]. Both NYUv2 and Cityscapes comprise the tasks of semantic segmentation and depth estimation. The third task for NYUv2 is surface normals estimation. CelebA constitutes a 40-class binary classification problem.

**Architectures** For NYUv2, we use a SegNet [1] and ImageNet pretrained ResNet-50 / ResNet-101 with a DeepLabHead. For Cityscapes, we use a SegNet and a DeepLabV3+ [5] network with pre-trained ResNet-50 / ResNet-101 backbones. Single-task learning (STL) baselines are only trained with the SegNet. For CelebA, we use a ResNet-18, also for STL.

We train all architectures on a training data set and use early stopping to determine the epoch with the best $\Delta_m$ on the validation data. Further using a line search, for each method, we have tested different learning rates and weight decays to find the best combination with respect to the $\Delta_m$ on the validation data. For this combination and the best epoch, the $\Delta_m$ and task specific metrics on the test data is reported.

**Metrics** To compare models, we use the widely established $\Delta_m$-metric [24]. It measures the average relative performance gain of the multi-task model $M_m$ w.r.t. a single-task baseline $M_b$:

$$\Delta_m = \frac{1}{K}\sum_{k=1}^{K}(-1)^{l_k}(M_{m,k} - M_{b,k})/M_{b,k}$$

, where $l_k$ is 1 if a higher value is better for criterion $M_k$, and $l_k$ is 0 otherwise. For the $\Delta_m$ metric, we further list the standard deviation.

Overall, UW-SO consistently performs best or second-best across all datasets and architectures w.r.t the $\Delta_m$ metric.

**NYUv2** On NYUv2, UW-SO achieves the best $\Delta_m$ score when trained on the ResNet-50 and the second-best behind Scalarization when trained on either the SegNet or

ResNet-101 (see Table 2). Both methods perform particularly well on the normal task, while still achieving strong results on the other two tasks. While UW-O slightly stays behind UW and IMTL-L on the SegNet, it is the third-best method on the ResNet architectures.

When comparing the three weighted losses for different MTO algorithms, we find that, interestingly, Scalarization and UW-SO result in comparable weighted losses, indicating that UW-SO finds a similar weighting scheme; though as a fraction of the computational cost.

**Cityscapes** We observe comparable results on Cityscapes: UW-SO shows the best performance when using one of the ResNet architectures and is only outperformed by Scalarization on SegNet. In contrast to NYUv2, the performance of Scalarization decreases for larger networks due to weak results on the difficult and highly sensitive relative depth error. While an even more fine-grained search of task-weights might yield better results, we argue that our weight search with step size going down to 0.02 was performed adequately well to keep the computational cost feasible.

**CelebA** Considering a more challenging setup with 40 tasks, UW-SO is clearly exceeding the performance of all other methods with a $\Delta_m$ score of -4.0 and an average error of 8.95 (see Table below). In contrast to the other two datasets, we did not include Scalarization due to the infeasibility of performing a grid search over 40 task weights. While we tried to run 50 different random weight combinations, we were not able to beat the EW performance and thus omit to report these results. Furthermore, GLS is also not reported as the losses diverge due to numerical instabilities for a large number of tasks. In contrast to our previous results on the other datasets, EW, RLW, and DWA show a strong performance on CelebA compared to UW and IMTL-L. We attribute this observation to UW and IMTL-L being prone to overfitting on a subset of tasks, as indicated by how early the validation $\Delta_m$ score reaches its minimum (e.g., epoch 6 for UW). We analyze the overfitting behavior of UW in comparison to UW-SO later in this section. As indicated by the negative $\Delta_m$ score, one achieves a positive transfer by training on multiple tasks simultaneously and using an appropriate MTO. Examining the task-level performance to verify that the enhanced average performance of UW-SO is not solely attributable to a limited set of tasks, it is noteworthy that UW-SO surpasses UW/UW-O/IMTL-L/RLW/EW/DWA in 34/34/31/27/24/24 out of 40 tasks.

| Method | Avg Err $\downarrow$ | Ep | $\Delta_m$ % $\downarrow$ |
|---|---|---|---|
| STL | 9.24 | | |
| EW | 9.00 | 33.2 | -2.4 + 0.4 |
| RLW | 9.01 | 54.4 | -2.5 $\pm$ 0.6 |
| DWA | 9.01 | 39.2 | -2.5 $\pm$ 0.7 |
| IMTL-L | 9.18 | 5.0 | -1.2 $\pm$ 0.9 |
| UW | 9.26 | 6.0 | -0.1 $\pm$ 0.7 |
| UW-O | 9.30 | 15.4 | -0.6 $\pm$ 0.7 |
| UW-SO | **8.95** | 61.2 | **-4.0 $\pm$ 0.2** |

Test data results on CelebA with ResNet-18. We show the average test error (5 runs) over all 40 tasks. The chosen softmax temperature for UW-SO is T = 100. We exclude GLS and Scalarization due to infeasibility, see details in the text.

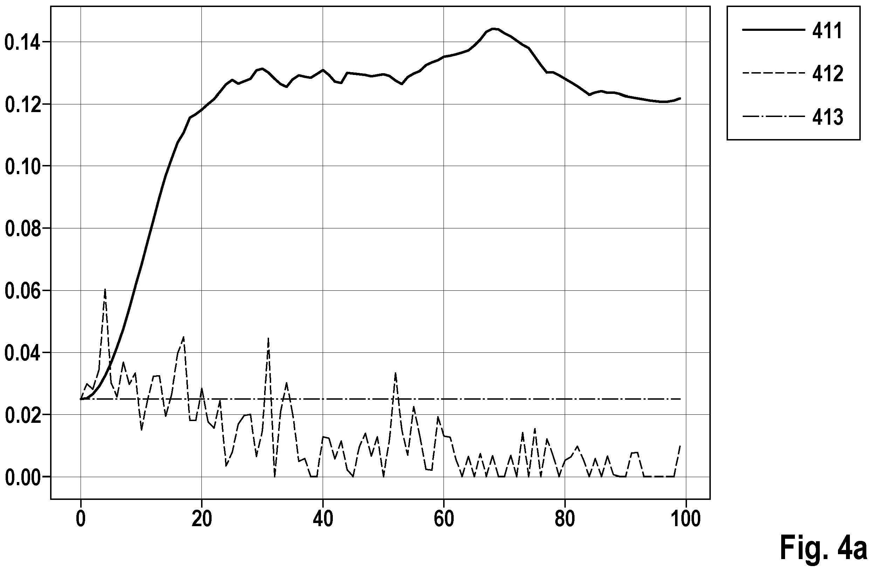

**Figure 4a** schematically shows an example of weight ratio development for an embodiment of training a multi-task neural network. The horizontal axis shows the number of Epochs. The vertical axis shows Bald Weight Ratio. Shown are Uncertainty Weighting 411 (UW), Soft Optimal Uncertainty Weighting 412 (UW-SO), and Equal Weighting 413 (EW)

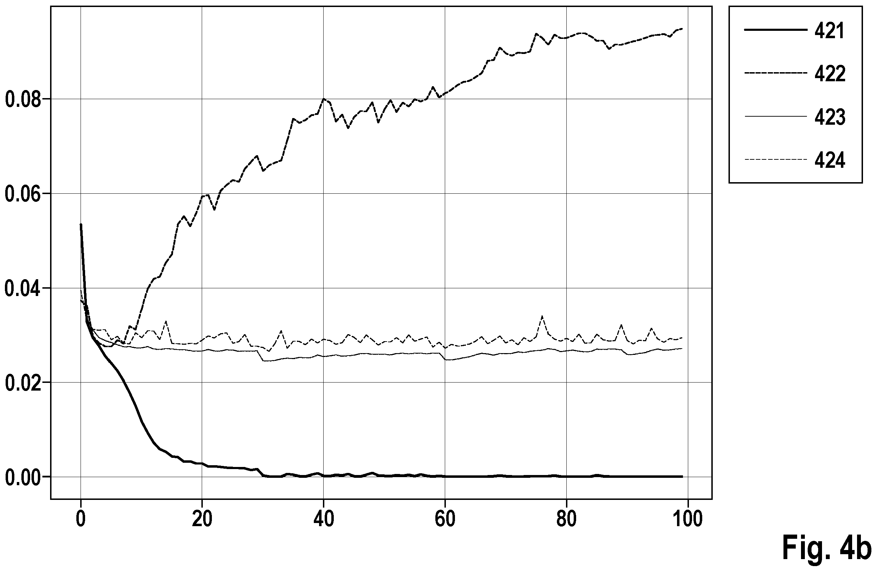

**Figure 4b** schematically shows an example of loss development for an embodiment of training a multi-task neural network. The horizontal axis shows the number of Epochs. The vertical axis in figure 4b shows Bald Loss. Shown are Uncertainty Weighting Train 421 (UW Train), Uncertainty Weighting Test 422 (UW Test), Soft Optimal Uncertainty Weighting Train 423 (UW-SO Train), Soft Optimal Uncertainty Weighting Test 424 (US-SO Test).

Figures 4a and 4b show a comparison of weight ratio and loss development of UW and UW-SO for the *Bald* task of CelebA. While UW shows superior training performance caused by putting a high weight on the task, it fails to generalize to unseen data, as evident in the increasing test loss. UW-SO puts less weight on the task and alleviates the overfitting.

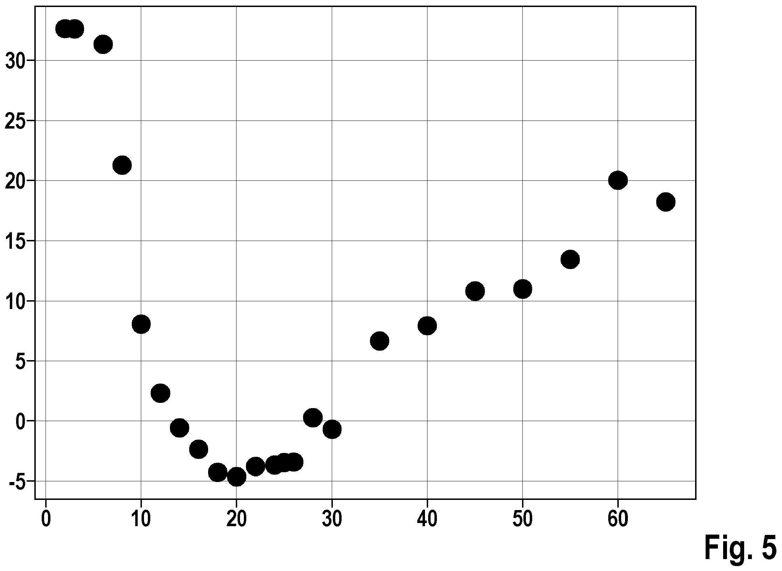

**Figure 5** schematically shows an example of performance for different choices of T in an embodiment. The horizontal axis shows Temperature T. The vertical axis shows $\Delta_m$ on the validation data. The figure shows the performance of UW-SO for different choices of *T.* The figure shows a clear, reasonably flat minimum for Cityscapes that eases the optimization of *T.* The UW-SO approach has a strong performance, but one needs to tune the single hyperparameter *T.* In Figure 5, we show how the performance changes when the temperature *T* is tuned for Cityscapes with a SegNet. The best run was achieved for $T = 20$, but values close to it are also performing well. We conducted a line search for *T* in steps of 5 and further with a step size of 2 around the optimum. We conclude that it is possible with acceptable tuning effort to find a good value for *T.*

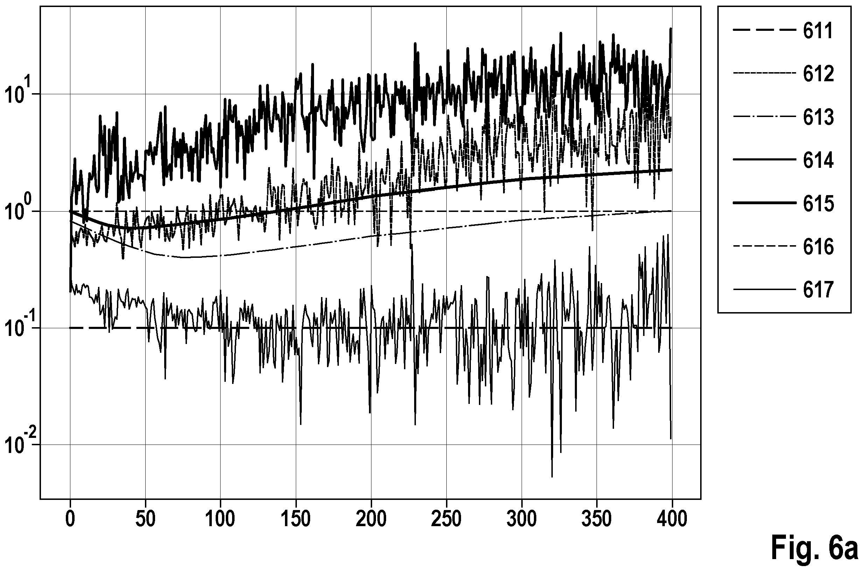

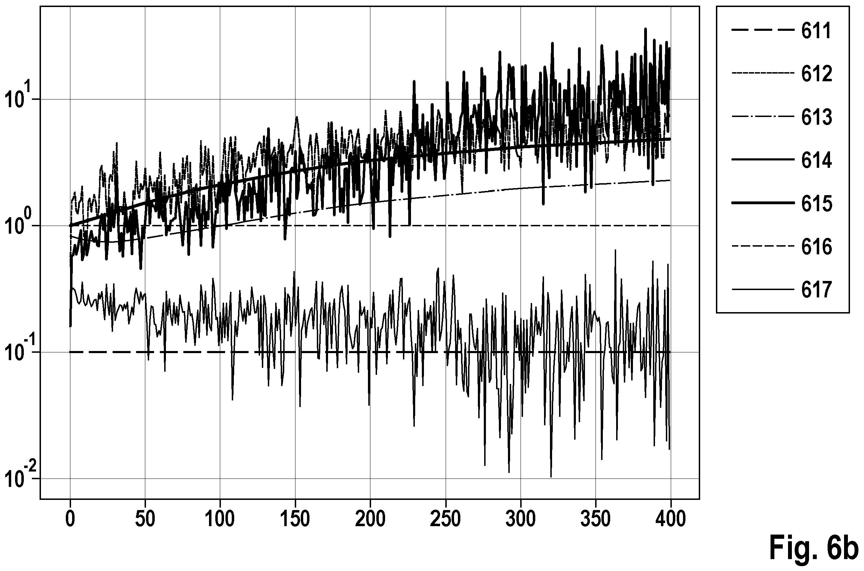

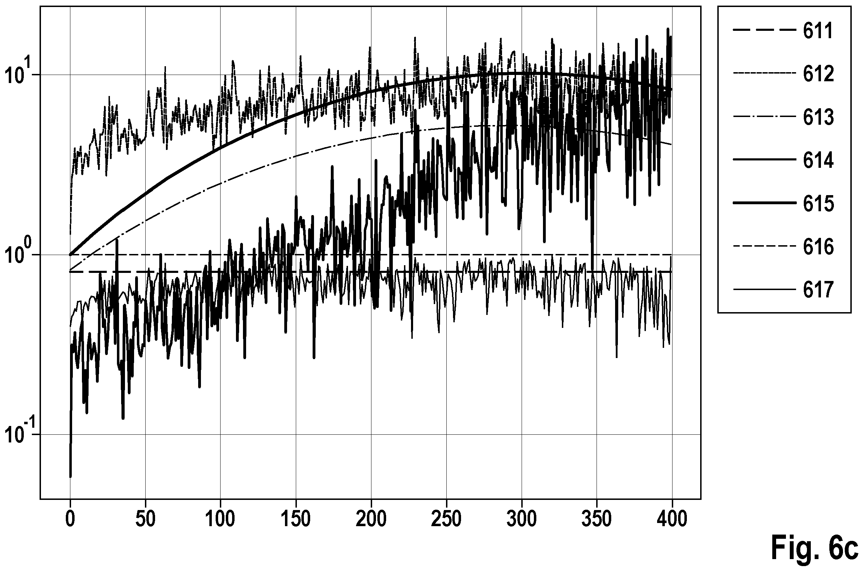

**Figure 6a** schematically shows an example of task weight development for the segmentation task in an embodiment. **Figure 6b** schematically shows an example of task weight development for the depth task in an embodiment. **Figure 6c** schematically shows an example of task weight development for the normal task in an embodiment.

In all three figures, the horizontal axis shows the epoch, and the vertical axis shows the task weight. The figures show: Scalar 611, Equal Weighting 612, Uncertainty Weighting 613, Geometric Loss Strategy 614, Impartial Multi-Task Learning 615, Optimal Uncertainty Weighting 616, Soft Optimal Uncertainty Weighting 617.

Comparing the task weights throughout the training process using various weighting methods provides better understanding of the respective weighting principles of each MTO approach. Figures 6 exemplarily shows the weights for the 3 tasks of the NYUv2 dataset using the SegNet.

Besides the similarity of Scalarization and UW-SO, we can also observe that UW-O and IMTL-L show a fairly similar task weight development. While IMTL-L develops the weights rather smoothly due to the small gradient updates, UW-O shows more fluctuation and jitters around IMTL-L.

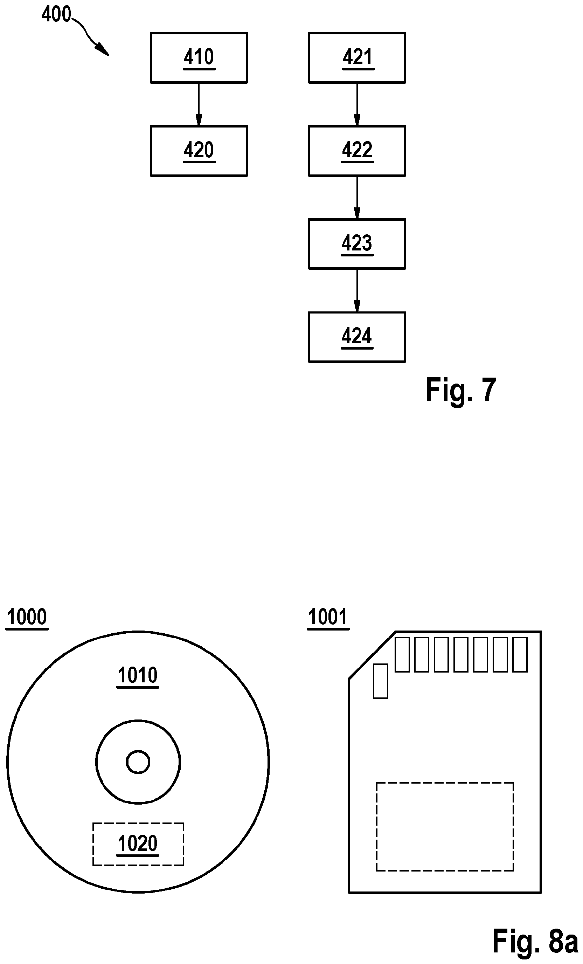

**Figure 7** schematically shows an example of an embodiment of a method 400 for training a multi-task neural network. The multi-task neural network being configured to receive an input (x) and to produce multiple outputs ($y_1,y_2,...,y_k$), the multi-task neural network input comprising dimensional data obtained from a sensor. Method 400 may be computer implemented and comprises

- obtaining (410) a training set, the training set comprising multiple training pairs of a training input and corresponding multiple training outputs,
- iterating (420) over the training set, comprising, for a training pair of the training set

  - evaluating (421) the multi-task neural network for the training input in the training pair, thus obtaining multiple outputs of the multi-task neural network,
  - computing (422) multiple individual losses ($L_1, L_2,..., L_k$) for the obtained multiple outputs of the multi-task neural network, each individual loss of the multiple individual losses indicating a difference between the output of the multi-task neural network and the corresponding training outputs of the multiple training outputs,
  - computing (423) task weights ($\omega_1, \omega_2,..., \omega_k$), comprising computing raw task weights from the multiple individual losses, and applying a normalization function to the raw task weights,

- adjusting (424) parameters of the multi-task neural network based on the computed individual losses weighted by the task weights.

In an embodiment, the method may comprise a training phase and an inference phase. In the training phase, multi-task neural network is trained, e.g., as described herein. In the inference phase, the trained multi-task neural network is used. For example, the inference phase may comprise receiving an input (*x*), and applying the trained multi-task neural network to the input, thus obtaining the corresponding multiple outputs of the multi-task neural network.

For example, the inference phase may be performed in or for a mechanical agent. The input data may represent a real-world environment of a mechanical agent, e.g., a robot or vehicle, operating in the environment. The multi-task neural network may be trained to infer a state of the environment and/or of the mechanical agent, the inference phase comprising - deriving a control function of the mechanical agent from one or more of the multiple outputs of the multi-task neural network, which control function is to be executed by the mechanical agent interacting with the real-world environment.

For example, the machine learning method may be computer implemented methods. For example, accessing training data, and/or receiving input data may be done using a communication interface, e.g., an electronic interface, a network interface, a memory interface, etc. For example, storing or retrieving parameters may be done from an electronic storage, e.g., a memory, a hard drive, etc., e.g., parameters of the networks. For example, applying a neural network to data of the training data, and/or adjusting the stored parameters to train the network may be done using an electronic computing device, e.g., a computer.

The neural networks, either during training and/or during applying may have multiple layers, which may include, e.g., convolutional layers and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method according to an embodiment, e.g., method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

Figure 8a shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method of training and/or evaluating a multi-task neural network, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of training and/or evaluating a multi-task neural network.

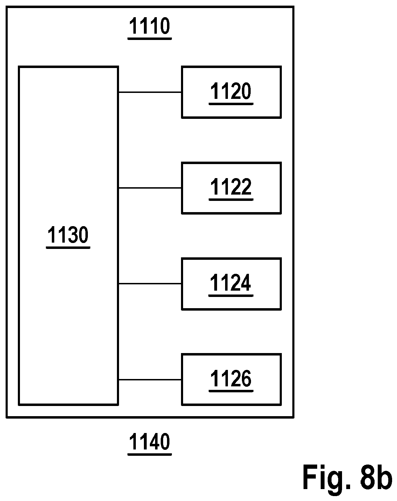

Figure 8b shows in a schematic representation of a processor system 1140 according to an embodiment. The processor system may be configured for a method of training and/or evaluating a multi-task neural network. The processor system comprises one or more integrated circuits 1110. The architecture of the one or more integrated circuits 1110 is schematically shown in Figure 8b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the neural network training device and/or neural network evaluation device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

Memory 1122 may be considered to be "non-transitory machine-readable media." As used herein, the term "non-transitory" will be understood to exclude transitory signals but to include all forms of storage, including both volatile and non-volatile memories.

While device 1100 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1100 is implemented in a cloud computing system, the various hardware components may belong to separate physical systems. For example, the processor 1120 may include a first processor in a first server and a second processor in a second server.

References

[1] Vijay Badrinarayanan, Alex Kendall, and Roberto Cipolla. Segnet: A deep convolutional encoder-decoder architecture for image segmentation. In IEEE Transactions on Pattern Analysis and Machine Intelligence, volume 39(12), pages 2481-2495. IEEE, 2017.

[2] Lin Baijiong, Ye Feiyang, and Zhang Yu. A closer look at loss weighting in multi-task learning. ArXiv preprint, abs/2111.10603, 2021.

[3] Rich Caruana. Multitask learning. Machine learning, 28(1):41-75, 1997.

[4] Sumanth Chennupati, Ganesh Sistu, Senthil Yogamani, and Samir A Rawashdeh. Multinet++: Multi-stream feature aggregation and geometric loss strategy for multi-task learning. In IEEE Conference on Computer Vision and Pattern Recognition, CVPR 2019, Long Beach, CA, USA, June 16-20, 2019, pages 0-0, 2019.

[5] Liang-Chieh Chen, Yukun Zhu, George Papandreou, Florian Schroff, and Hartwig Adam. Encoder-decoder with atrous separable convolution for semantic image segmentation. In Proceedings of the European conference on computer vision (ECCV), pages 801-818, 2018.

[6] Zhao Chen, Vijay Badrinarayanan, Chen-Yu Lee, and Andrew Rabinovich. Gradnorm: Gradient normalization for adaptive loss balancing in deep multitask networks. In Jennifer G. Dy and Andreas Krause, editors, Proceedings of the 35th International Conference on Machine Learning, ICML 2018, Stockholmsmässan, Stockholm, Sweden, July 10-15, 2018, volume 80 of Proceedings of Machine Learning Research, pages 793-802. PMLR, 2018.

[7] Zhao Chen, Jiquan Ngiam, Yanping Huang, Thang Luong, Henrik Kretzschmar, Yuning Chai, and Dragomir Anguelov. Just pick a sign: Optimizing deep multitask models with gradient sign dropout. In Hugo Larochelle, Marc'Aurelio Ranzato, Raia Hadsell, Maria-Florina Balcan, and Hsuan-Tien Lin, editors, Advances in Neural Information Processing Systems 33: Annual Conference on Neural Information Processing Systems 2020, NeurIPS 2020, December 6-12, 2020, virtual, 2020.

[8] Marius Cordts, Mohamed Omran, Sebastian Ramos, Timo Rehfeld, Markus Enzweiler, Rodrigo Benenson, Uwe Franke, Stefan Roth, and Bernt Schiele. The cityscapes dataset for semantic urban scene understanding. In 2016 IEEE Conference on Computer Vision and Pattern Recognition, CVPR 2016, Las Vegas, NV, USA, June 27-30, 2016, pages 3213-3223. IEEE Computer Society, 2016.

[9] Jia Deng, Wei Dong, Richard Socher, Li-Jia Li, Kai Li, and Fei-Fei Li. Imagenet: A large-scale hierarchical image database. In 2009 IEEE Computer Society Conference on Computer Vision and Pattern Recognition (CVPR 2009), 20-25 June 2009, Miami, Florida, USA, pages 248-255. IEEE Computer Society, 2009.

[10] Long Duong, Trevor Cohn, Steven Bird, and Paul Cook. Low resource dependency parsing: Cross-lingual parameter sharing in a neural network parser. In Proceedings of the 53rd Annual Meeting of the Association for Computational Linguistics and the 7th International Joint Conference on Natural Language Processing (Volume 2:

Short Papers), pages 845-850, Beijing, China, 2015. Association for Computational Linguistics.

[11] Cathrin Elich, Lukas Kirchdorfer, Jan M. Koehler, and Lukas Schott. Challenging common assumptions in multi-task learning. ArXiv preprint, abs/2311.04698, 2023.

[12] Michelle Guo, Albert Haque, De-An Huang, Serena Yeung, and Li Fei-Fei. Dynamic task prioritization for multitask learning. In Proceedings of the European Conference on Computer Vision (ECCV), 2018.

[13] Falk Heuer, Sven Mantowsky, Syed Saqib Bukhari, and Georg Schneider. Multitask-centernet (MCN): efficient and diverse multitask learning using an anchor free approach. In IEEE/CVF International Conference on Computer Vision Workshops, ICCVW 2021, Montreal, BC, Canada, October 11-17, 2021, pages 997-1005. IEEE, 2021.

[14] Ronghang Hu and Amanpreet Singh. Unit: Multimodal multitask learning with a unified transformer. In 2021 IEEE/CVF International Conference on Computer Vision, ICCV2021, Montreal, QC, Canada, October 10-17, 2021, pages 1419-1429. IEEE, 2021.

[15] Adrián Javaloy and Isabel Valera. Rotograd: Gradient homogenization in multitask learning. In The Tenth International Conference on Learning Representations, ICLR 2022, Virtual Event, April 25-29, 2022. OpenReview.net, 2022.

[16] Alex Kendall, Yarin Gal, and Roberto Cipolla. Multi-task learning using uncertainty to weigh losses for scene geometry and semantics. In 2018 IEEE Conference on Computer Vision and Pattern Recognition, CVPR 2018, Salt Lake City, UT, USA, June 18-22, 2018, pages 7482-7491. IEEE Computer Society, 2018.

[17] Vitaly Kurin, Alessandro De Palma, Ilya Kostrikov, Shimon Whiteson, and Pawan Kumar Mudigonda. In defense of the unitary scalarization for deep multi-task learning. In Advances in Neural Information Processing Systems 35: Annual Conference on Neural Information Processing Systems 2022, NeurIPS 2022, December, virtual, 2022.

[18] Baijiong Lin, Feiyang Ye, Yu Zhang, and Ivor W. Tsang. Reasonable effectiveness of random weighting: A litmus test for multi-task learning. ArXiv preprint, abs/1706.05587, 2017.

[19] Baijiong Lin and Yu Zhang. LibMTL: A python library for multi-task learning. Journal of Machine Learning Research, 2023.

[20] Bo Liu, Xingchao Liu, Xiaojie Jin, Peter Stone, and Qiang Liu. Conflict-averse gradient descent for multi-task learning. In Marc'Aurelio Ranzato, Alina Beygelzimer, Yann N. Dauphin, Percy Liang, and Jennifer Wortman Vaughan, editors, Advances in Neural Information Processing Systems 34: Annual Conference on Neural Information Processing Systems 2021, NeurIPS 2021, December 6-14, 2021, virtual, pages 18878-18890, 2021.

[21] Liyang Liu, Yi Li, Zhanghui Kuang, Jing-Hao Xue, Yimin Chen, Wenming Yang, Qingmin Liao, and Wayne Zhang. Towards impartial multi-task learning. In 9th International Conference on Learning Representations, ICLR 2021, Virtual Event, Austria, May 3-7, 2021. OpenReview.net, 2021.

[22] Shikun Liu, Edward Johns, and Andrew J. Davison. End-to-end multi-task learning with attention. In IEEE Conference on Computer Vision and Pattern Recognition, CVPR 2019, Long Beach, CA, USA, June 16-20, 2019, pages 1871-1880. Computer Vision Foundation / IEEE, 2019.

[23] Ziwei Liu, Ping Luo, Xiaogang Wang, and Xiaoou Tang. Deep learning face attributes in the wild. In 2015 IEEE International Conference on Computer Vision, ICCV 2015, Santiago, Chile, December 7-13, 2015, pages 3730-3738. IEEE Computer Society, 2015.

[24] Kevis-Kokitsi Maninis, Ilija Radosavovic, and Iasonas Kokkinos. Attentive single-tasking of multiple tasks. In IEEE Conference on Computer Vision and Pattern Recognition, CVPR 2019, Long Beach, CA, USA, June 16-20, 2019, pages 1851-1860. Computer Vision Foundation / IEEE, 2019.

[25] Yuren Mao, Zekai Wang, Weiwei Liu, Xuemin Lin, and Pengtao Xie. MetaWeighting: Learning to weight tasks in multi-task learning. In Findings of the Association for Computational Linguistics: ACL 2022, pages 3436-3448, Dublin, Ireland, 2022. Association for Computational Linguistics.

[26] Ishan Misra, Abhinav Shrivastava, Abhinav Gupta, and Martial Hebert. Cross-stitch networks for multi-task learning. In 2016 IEEE Conference on Computer Vision and Pattern Recognition, CVPR 2016, Las Vegas, NV, USA, June 27-30, 2016, pages 3994-4003. IEEE Computer Society, 2016.

[27] Pushmeet Kohli Nathan Silberman, Derek Hoiem and Rob Fergus. Indoor segmentation and support inference from rgbd images. In Proceedings of the European conference on computer vision (ECCV), 2012.

[28] Aviv Navon, Aviv Shamsian, Idan Achituve, Haggai Maron, Kenji Kawaguchi, Gal Chechik, and Ethan Fetaya. Multi-task learning as a bargaining game. In Kamalika Chaudhuri, Stefanie Jegelka, Le Song, Csaba Szepesvári, Gang Niu, and Sivan Sabato, editors, International Conference on Machine Learning, ICML 2022, 17-23 July 2022, Baltimore, Maryland, USA, volume 162 of Proceedings of Machine Learning Research, pages 16428-16446. PMLR, 2022.

[29] Sebastian Ruder. An overview of multi-task learning in deep neural networks. ArXiv preprint, abs/1706.05098, 2017.

[30] Ozan Sener and Vladlen Koltun. Multi-task learning as multi-objective optimization. In Samy Bengio, Hanna M. Wallach, Hugo Larochelle, Kristen Grauman, Nicolò Cesa-Bianchi, and Roman Garnett, editors, Advances in Neural Information Processing Systems 31: Annual Conference on Neural Information Processing Systems 2018, NeurIPS 2018, December 3-8, 2018, Montréal, Canada, pages 525-536, 2018.

[31] Dmitry Senushkin, Nikolay Patakin, Arseny Kuznetsov, and Anton Konushin. Independent component alignment for multi-task learning. In Proceedings of the IEEE/CVF Conference on Computer Vision and Pattern Recognition (CVPR), pages 20083-20093, 2023.

[32] Guangyuan Shi, Qimai Li, Wenlong Zhang, Jiaxin Chen, and Xiao-Ming Wu. Recon: Reducing Conflicting Gradients From the Root For Multi-Task Learning. In The Eleventh International Conference on Learning Representations, 2023.

[33] Simon Vandenhende, Stamatios Georgoulis, Wouter Van Gansbeke, Marc Proesmans, Dengxin Dai, and Luc Van Gool. Multi-task learning for dense prediction tasks: A survey. In IEEE transactions on pattern analysis and machine intelligence. IEEE, 2021.

[34] Derrick Xin, Behrooz Ghorbani, Ankush Garg, Orhan Firat, and Justin Gilmer. Do current multi-task optimization methods in deep learning even help? In Advances in Neural Information Processing Systems 35: Annual Conference on Neural Information Processing Systems 2022, NeurIPS 2022, December, virtual, 2022.

[35] Dan Xu, Wanli Ouyang, Xiaogang Wang, and Nicu Sebe. Pad-net: Multi-tasks guided prediction-and-distillation network for simultaneous depth estimation and scene parsing. In 2018 IEEE Conference on Computer Vision and Pattern Recognition, CVPR 2018, Salt Lake City, UT, USA, June 18-22, 2018, pages 675-684. IEEE Computer Society, 2018.

[36] Yongxin Yang and Timothy M Hospedales. Trace norm regularised deep multi-task learning. ArXiv preprint, abs/1606.04038, 2016.

[37] Tianhe Yu, Saurabh Kumar, Abhishek Gupta, Sergey Levine, Karol Hausman, and Chelsea Finn. Gradient surgery for multi-task learning. In Hugo Larochelle, Marc'Aurelio Ranzato, Raia Hadsell, Maria-Florina Balcan, and Hsuan-Tien Lin, editors, Advances in Neural Information Processing Systems 33: Annual Conference on Neural Information Processing Systems 2020, NeurIPS 2020, December 6-12, 2020, virtual, 2020.

[38] HINTON, Geoffrey; VINYALS, Oriol; DEAN, Jeff. Distilling the knowledge in a neural network. arXiv preprint arXiv:1503.02531, 2015.

[39] LIANG, Xuezhi, et al. Soft-margin softmax for deep classification. In: International Conference on Neural Information Processing. Cham: Springer International Publishing, 2017. S. 413-421.

[40] DE BREBISSON, Alexandre; VINCENT, Pascal. An exploration of softmax alternatives belonging to the spherical loss family. arXiv preprint arXiv:1511.05042, 2015.

**Claims**

1. A computer-implemented method (400) for training a multi-task neural network, the multi-task neural network being configured to receive an input (x) and to produce multiple outputs ($y_1, y_2, ..., y_k$), the multi-task neural network input comprising dimensional data obtained from a sensor, the method comprising

   - obtaining (410) a training set, the training set comprising multiple training pairs of a training input and corresponding multiple training outputs,
   - iterating (420) over the training set, comprising, for a training pair of the training set
   - evaluating (421) the multi-task neural network for the training input in the training pair, thus obtaining multiple outputs of the multi-task neural network,
   - computing (422) multiple individual losses ($L_1, L_2, ..., L_k$) for the obtained multiple outputs of the multi-task neural network, each individual loss of the multiple individual losses indicating a difference between the output of the multi-task neural network and the corresponding training outputs of the multiple training outputs,
   - computing (423) task weights ($\omega_1, \omega_2, ..., \omega_k$), comprising computing raw task weights from the multiple individual losses, and applying a normalization function to the raw task weights,
   - adjusting (424) parameters of the multi-task neural network based on the computed individual losses weighted by the task weights.

2. A training method as in Claim 1, wherein the normalization function is a probability distribution function.

3. A training method as in Claim 1 or 2, wherein the normalization function comprises a SoftMax, Temperature-Scaled SoftMax, soft-margin SoftMax, Taylor SoftMax, or any combination thereof.

4. A training method as in any one of the preceding claims, wherein the multiple task weights (e.g., $\omega_i$) are chosen to scale the corresponding multiple individual losses to a constant (e. g., $\omega_i L_i = 1$).

5. A training method as in any one of the preceding claims, wherein a stop gradient operator is applied to the multiple task weights.

6. A training method as in any one of the preceding claims, wherein the iterations over the training set are batched, the multiple individual losses being computed for a batch of training pairs and averaged to obtained batched individual losses, the raw task weights being computed from the batched individual losses.

7. A training method as in any one of the preceding claims, wherein the input data comprises at least image data, and

   - at least one of the multiple outputs classify an object in the image data, and/or
   - at least one of the multiple outputs comprise estimated depth for the image data, and/or
   - at least one of the multiple outputs comprise an object segmentation for the image data.

8. A training method as in any one of the preceding claims, wherein the input data represents a real-world environment of a mechanical agent, e.g., a robot or vehicle, operating in the environment, the multi-task neural network being trained to infer a state of the environment and/or of the mechanical agent.

9. A training method as in any of the preceding claims, wherein the image data comprises one or more of: audio data, image data, video data, lidar data, radar data, infrared data, ultrasonic data, sensor data, temperature data, pressure data, electrophysiological recording.

10. A training method as in any one of the preceding claims, wherein the multi-task neural network comprises a shared backbone and multiple task-specific heads, the shared backbone being configured to receive the input (x), the multiple task-specific heads receiving the output of the shared backbone, each one of the multiple outputs being produced by a corresponding one of the multiple task-specific heads.

11. A method for a multi-task neural network, comprising a training phase and an inference phase, wherein

   - the training phase comprises a training method according to any one of the preceding claims, obtaining a trained multi-task neural network, and
   - the inference phase comprises receiving an input (x), and applying the trained multi-task neural network to the input, thus obtaining the corresponding multiple outputs of the multi-task neural network.

12. A method as in Claim 11, wherein the input data represents a real-world environment of a mechanical agent, e.g., a robot or vehicle, operating in the environment, the multi-task neural network being trained to infer a state of the environment and/or of the mechanical agent, the inference phase comprising

- deriving a control function of the mechanical agent from one or more of the multiple outputs of the multi-task neural network, which control function is to be executed by the mechanical agent interacting with the real-world environment.

13. A system comprising: one or more processors; and one or more storage devices storing instructions that, when executed by the one or more processors, cause the one or more processors to perform operations for a method according to any one of the preceding claims.

14. A transitory or non-transitory computer storage medium encoded with instructions that, when executed by one or more computers, cause the one or more computers to perform a method according to any one of claims 1-12.

**Amended claims in accordance with Rule 137(2) EPC.**

1. A computer-implemented method (400) for training a multi-task neural network, the multi-task neural network being configured to receive an input (x) and to produce multiple outputs ($y_1, y_2, ..., y_k$), the multi-task neural network input comprising dimensional data obtained from a sensor, wherein the input data comprises at least image data, and at least one of the multiple outputs classify an object in the image data, and/or at least one of the multiple outputs comprise estimated depth for the image data, and/or at least one of the multiple outputs comprise an object segmentation for the image data, the method comprising:

- obtaining (410) a training set, the training set comprising multiple training pairs of a training input and corresponding multiple training outputs,
- iterating (420) over the training set, comprising, for a training pair of the training set, wherein the iterations over the training set are batched, the multiple individual losses being computed for a batch of training pairs and averaged to obtained batched individual losses, the raw task weights being computed from the batched individual losses,
- evaluating (421) the multi-task neural network for the training input in the training pair, thus obtaining multiple outputs of the multi-task neural network,
- computing (422) multiple individual losses ($L_1, L_2, ..., L_k$) for the obtained multiple outputs of the multi-task neural network, each individual loss of the multiple individual losses indicating a difference between the output of the multi-task neural network and the corresponding training outputs of the multiple training outputs,
- computing (423) task weights ($\omega_1, \omega_2, ..., \omega_k$), comprising computing raw task weights from the multiple individual losses, and applying a normalization function to the raw task weights,
wherein the normalization function is given as follows:

$$ L = \sum_{k \in \mathcal{K}} \frac{exp(\frac{1}{sg[L_k]}/T)}{\sum_{j \in \mathcal{K}} exp(\frac{1}{sg[L_j]}/T)} L_k, $$

where T denotes a softmax temperature and *sg* denotes a stopgradient operator, and
- adjusting (424) parameters of the multi-task neural network based on the computed individual losses weighted by the task weights.

2. A training method as in Claim 1, wherein the normalization function is a probability distribution function.

3. A training method as in Claim 1 or 2, wherein the normalization function comprises a SoftMax, Temperature-Scaled SoftMax, soft-margin SoftMax, Taylor SoftMax, or any combination thereof.

4. A training method as in any one of the preceding claims, wherein the multiple task weights $\omega_i$ are chosen to scale the corresponding multiple individual losses to a constant: $\omega_i L_i = 1$ .

5. A training method as in any one of the preceding claims, wherein a stop gradient operator is applied to the multiple task weights.

6. A training method as in any one of the preceding claims, wherein the input data represents a real-world environment of a mechanical agent, e.g., a robot or vehicle, operating in the environment, the multi-task neural network being trained to infer a state of the environment and/or of the mechanical agent.

7. A training method as in any of the preceding claims, wherein the input data comprises one or more of: audio data, image data, video data, lidar data, radar data, infrared data, ultrasonic data, sensor data, temperature data, pressure data, electrophysiological recording.

8. A training method as in any one of the preceding claims, wherein the multi-task neural network comprises a shared backbone and multiple task-specific heads, the shared backbone being configured to receive the input (x), the multiple task-specific heads receiving the output of the shared backbone, each one of the multiple outputs being produced by a corresponding one of the multiple task-specific heads.

9. A method for a multi-task neural network, comprising a training phase and an inference phase, wherein

- the training phase comprises a training method according to any one of the preceding claims, obtaining a trained multi-task neural network, and
- the inference phase comprises receiving an input (x), and applying the trained multi-task neural network to the input, thus obtaining the corresponding multiple outputs of the multi-task neural network.

10. A method as in Claim 9, wherein the input data represents a real-world environment of a mechanical agent, e.g., a robot or vehicle, operating in the environment, the multi-task neural network being trained to infer a state of the environment and/or of the mechanical agent, the inference phase comprising

- deriving a control function of the mechanical agent from one or more of the multiple outputs of the multi-task neural network, which control function is to be executed by the mechanical agent interacting with the real-world environment.

11. A system comprising: one or more processors; and one or more storage devices storing instructions that, when executed by the one or more processors, cause the one or more processors to perform operations for a method according to any one of the preceding claims.

12. A transitory or non-transitory computer storage medium encoded with instructions that, when executed by one or more computers, cause the one or more computers to perform a method according to any one of claims 1-10.

**110**

**111**

**112**

**113**

## Fig. 1a

**120**

**121**

**122**

**123**

## Fig. 1b

200

**210**

**211**

. . .

**220**

**221**

- - - - - - - - - - - - - - - - - - - - - - - - - - - - - - - - - - - - - - - - - - - - -

**212**

. . .

**222**

**213**

. . .

**223**

**214**

. . .

**224**

## Fig. 2

300

| 301 | — | 310 |

| 321 | — | 331 |

| 322 | — | 332 |

| 323 | — | 333 |

## Fig. 3a

| 331 | --- | 341 |
| 332 | --- | 342 |
| 333 | --- | 343 |

| 370 | → | 380 |

| 350 | → | 352 | → | 360 |

| 351 |
| 353 |

| 361 |
| 362 |
| 363 |

## Fig. 3b

Fig. 4a

EP 4 604 013 A1

Fig. 4b

Fig. 5

611
612
613
614
615
616
617

**Fig. 6a**

Fig. 6b

611
612
613
614
615
616
617

Fig. 6c

400

| 410 |
|:---:|

↓

| 420 |
|:---:|

| 421 |
|:---:|

↓

| 422 |
|:---:|

↓

| 423 |
|:---:|

↓

| 424 |
|:---:|

## Fig. 7

1000

1010

1020

1001

## Fig. 8a

Fig. 8b

Europäisches
Patentamt

European
Patent Office

Office européen
des brevets

## EUROPEAN SEARCH REPORT

**Application Number**

EP 24 15 8197

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JACOB GEETHU MIRIAM ET AL: "Online Knowledge Distillation for Multi-task Learning", 2023 IEEE/CVF WINTER CONFERENCE ON APPLICATIONS OF COMPUTER VISION (WACV), IEEE, 2 January 2023 (2023-01-02), pages 2358-2367, XP034290525, DOI: 10.1109/WACV56688.2023.00239 [retrieved on 2023-02-06] * page 1 - page 8 * | 1-14 | INV. G06N3/045 G06N3/084 G06N3/09 |
| A | HAOYU MA ET AL: "Harmony World Models: Boosting Sample Efficiency for Model-based Reinforcement Learning", ARXIV.ORG, CORNELL UNIVERSITY LIBRARY, 201 OLIN LIBRARY CORNELL UNIVERSITY ITHACA, NY 14853, 30 September 2023 (2023-09-30), XP091627443, * page 6 * | 1-14 | |

**TECHNICAL FIELDS SEARCHED (IPC)**

G06N

The present search report has been drawn up for all claims

| Place of search | Date of completion of the search | Examiner |
|---|---|---|
| The Hague | 17 July 2024 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Non-patent literature cited in the description**

- Segnet: A deep convolutional encoder-decoder architecture for image segmentation. **VIJAY BA-DRINARAYANAN** ; **ALEX KENDALL** ; **ROBERTO CIPOLLA**. IEEE Transactions on Pattern Analysis and Machine Intelligence. IEEE, 2017, vol. 39, 2481-2495
- **LIN BAIJIONG** ; **YE FEIYANG** ; **ZHANG YU**. A closer look at loss weighting in multi-task learning. *ArXiv preprint, abs/2111.10603*, 2021
- **RICH CARUANA**. Machine learning. *Multitask learning*, 1997, vol. 28 (1), 41-75
- **SUMANTH CHENNUPATI** ; **GANESH SISTU** ; **SENTHIL YOGAMANI** ; **SAMIR A RAWASHDEH**. Multinet++: Multi-stream feature aggregation and geometric loss strategy for multi-task learning. *IEEE Conference on Computer Vision and Pattern Recognition, CVPR 2019, Long Beach, CA, USA, June 16-20, 2019*, 2019, 0-0
- **LIANG-CHIEH CHEN** ; **YUKUN ZHU** ; **GEORGE PAPANDREOU** ; **FLORIAN SCHROFF** ; **HARTWIG ADAM**. Encoder-decoder with atrous separable convolution for semantic image segmentation. *Proceedings of the European conference on computer vision (ECCV)*, 2018, 801-818
- Gradnorm: Gradient normalization for adaptive loss balancing in deep multitask networks. **ZHAO CHEN** ; **VIJAY BADRINARAYANAN** ; **CHEN-YU LEE** ; **ANDREW RABINOVICH**. Proceedings of the 35th International Conference on Machine Learning, ICML 2018, Stockholmsmässan, Stockholm, Sweden, July 10-15, 2018, volume 80 of Proceedings of Machine Learning Research. 10 July 2018, vol. 80, 793-802
- Just pick a sign: Optimizing deep multitask models with gradient sign dropout. **ZHAO CHEN** ; **JIQUAN NGIAM** ; **YANPING HUANG** ; **THANG LUONG** ; **HENRIK KRETZSCHMAR** ; **YUNING CHAI** ; **DRAGOMIR ANGUELOV**. Advances in Neural Information Processing Systems 33: Annual Conference on Neural Information Processing Systems 2020, NeurIPS 2020, December 6-12, 2020, virtual. 06 December 2020

- The cityscapes dataset for semantic urban scene understanding. **MARIUS CORDTS** ; **MOHAMED OMRAN** ; **SEBASTIAN RAMOS** ; **TIMO REHFELD** ; **MARKUS ENZWEILER** ; **RODRIGO BENENSON** ; **UWE FRANKE** ; **STEFAN ROTH** ; **BERNT SCHIELE**. 2016 IEEE Conference on Computer Vision and Pattern Recognition, CVPR 2016, Las Vegas, NV, USA, June 27-30, 2016. IEEE Computer Society, 2016, 3213-3223
- Imagenet: A large-scale hierarchical image database. **JIA DENG** ; **WEI DONG** ; **RICHARD SOCHER** ; **LI-JIA LI** ; **KAI LI** ; **FEI-FEI LI**. 2009 IEEE Computer Society Conference on Computer Vision and Pattern Recognition (CVPR 2009), 20-25 June 2009, Miami, Florida, USA. IEEE Computer Society, 2009, 248-255
- Low resource dependency parsing: Cross-lingual parameter sharing in a neural network parser. **LONG DUONG** ; **TREVOR COHN** ; **STEVEN BIRD** ; **PAUL COOK**. Proceedings of the 53rd Annual Meeting of the Association for Computational Linguistics and the 7th International Joint Conference on Natural Language Processing (Volume 2: Short Papers). Association for Computational Linguistics, 2015, vol. 2, 845-850
- **CATHRIN ELICH** ; **LUKAS KIRCHDORFER** ; **JAN M. KOEHLER** ; **LUKAS SCHOTT**. Challenging common assumptions in multi-task learning. *ArXiv preprint, abs/2311.04698*, 2023
- **MICHELLE GUO** ; **ALBERT HAQUE** ; **DE-AN HUANG** ; **SERENA YEUNG** ; **LI FEI-FEI**. Dynamic task prioritization for multitask learning. *Proceedings of the European Conference on Computer Vision (ECCV)*, 2018
- Multitask-centernet (MCN): efficient and diverse multitask learning using an anchor free approach. **FALK HEUER** ; **SVEN MANTOWSKY** ; **SYED SAQIB BUKHARI** ; **GEORG SCHNEIDER**. IEEE/CVF International Conference on Computer Vision Workshops, ICCVW 2021, Montreal, BC, Canada, October 11-17, 2021. IEEE, 11 October 2021, 997-1005
- Unit: Multimodal multitask learning with a unified transformer. **RONGHANG HU** ; **AMANPREET SINGH**. IEEE/CVF International Conference on Computer Vision, ICCV2021, Montreal, QC, Canada, October 10-17, 2021. IEEE, 10 October 2021, 1419-1429

- **ADRIÁN JAVALOY** ; **ISABEL VALERA**. Rotograd: Gradient homogenization in multitask learning. *The Tenth International Conference on Learning Representations, ICLR 2022, Virtual Event, April 25-29, 2022*, 25 April 2022
- Multi-task learning using uncertainty to weigh losses for scene geometry and semantics. **ALEX KENDALL** ; **YARIN GAL** ; **ROBERTO CIPOLLA**. 2018 IEEE Conference on Computer Vision and Pattern Recognition, CVPR 2018, Salt Lake City, UT, USA, June 18-22, 2018. IEEE Computer Society, 18 June 2018, 7482-7491
- **VITALY KURIN** ; **ALESSANDRO DE PALMA** ; **ILYA KOSTRIKOV** ; **SHIMON WHITESON** ; **PAWAN KUMAR MUDIGONDA**. In defense of the unitary scalarization for deep multi-task learning. *Advances in Neural Information Processing Systems 35: Annual Conference on Neural Information Processing Systems 2022, NeurIPS 2022, December, virtual*, 2022
- **BAIJIONG LIN** ; **FEIYANG YE** ; **YU ZHANG** ; **IVOR W. TSANG**. Reasonable effectiveness of random weighting: A litmus test for multi-task learning. *ArXiv preprint, abs/1706.05587*, 2017
- **BAIJIONG LIN** ; **YU ZHANG**. LibMTL: A python library for multi-task learning. *Journal of Machine Learning Research*, 2023
- Conflict-averse gradient descent for multi-task learning. **BO LIU** ; **XINGCHAO LIU** ; **XIAOJIE JIN** ; **PETER STONE** ; **QIANG LIU**. Advances in Neural Information Processing Systems 34: Annual Conference on Neural Information Processing Systems 2021, NeurIPS 2021, December 6-14, 2021, virtual. 06 December 2021, 18878-18890
- **LIYANG LIU** ; **YI LI** ; **ZHANGHUI KUANG** ; **JING-HAO XUE** ; **YIMIN CHEN** ; **WENMING YANG** ; **QINGMIN LIAO** ; **WAYNE ZHANG**. Towards impartial multi-task learning. *9th International Conference on Learning Representations, ICLR 2021, Virtual Event, Austria, May 3-7, 2021*, 03 May 2021
- End-to-end multi-task learning with attention. **SHI-KUN LIU** ; **EDWARD JOHNS** ; **ANDREW J. DAVISON**. IEEE Conference on Computer Vision and Pattern Recognition, CVPR 2019, Long Beach, CA, USA, June 16-20, 2019. Computer Vision Foundation / IEEE, 16 June 2019, 1871-1880
- Deep learning face attributes in the wild. **ZIWEI LIU** ; **PING LUO** ; **XIAOGANG WANG** ; **XIAOOU TANG**. 2015 IEEE International Conference on Computer Vision, ICCV 2015, Santiago, Chile, December 7-13, 2015. IEEE Computer Society, 07 December 2015, 3730-3738
- Attentive single-tasking of multiple tasks. **KEVIS-KOKITSI MANINIS** ; **ILIJA RADOSAVOVIC** ; **LASONAS KOKKINOS**. IEEE Conference on Computer Vision and Pattern Recognition, CVPR 2019, Long Beach, CA, USA, June 16-20, 2019. Computer Vision Foundation / IEEE, 16 June 2019, 1851-1860
- MetaWeighting: Learning to weight tasks in multi-task learning. **YUREN MAO** ; **ZEKAI WANG** ; **WEIWEI LIU** ; **XUEMIN LIN** ; **PENGTAO XIE**. Findings of the Association for Computational Linguistics: ACL 2022. Association for Computational Linguistics, 2022, 3436-3448
- Cross-stitch networks for multi-task learning. **ISHAN MISRA** ; **ABHINAV SHRIVASTAVA** ; **ABHINAV GUPTA** ; **MARTIAL HEBERT**. 2016 IEEE Conference on Computer Vision and Pattern Recognition, CVPR 2016, Las Vegas, NV, USA, June 27-30, 2016. IEEE Computer Society, 27 June 2016, 3994-4003
- **PUSHMEET KOHLI** ; **NATHAN SILBERMAN** ; **DEREK HOIEM** ; **ROB FERGUS**. Indoor segmentation and support inference from rgbd images. *Proceedings of the European conference on computer vision (ECCV)*, 2012
- Multi-task learning as a bargaining game. **AVIV NAVON** ; **AVIV SHAMSIAN** ; **IDAN ACHITUVE** ; **HAGGAI MARON** ; **KENJI KAWAGUCHI** ; **GAL CHECHIK** ; **ETHAN FETAYA**. International Conference on Machine Learning, ICML 2022, 17-23 July 2022, Baltimore, Maryland, USA, volume 162 of Proceedings of Machine Learning Research. 17 July 2022, vol. 162, 16428-16446
- **SEBASTIAN RUDER**. An overview of multi-task learning in deep neural networks. *ArXiv preprint, abs/1706.05098*, 2017
- Multi-task learning as multi-objective optimization. **OZAN SENER** ; **VLADLEN KOLTUN**. dvances in Neural Information Processing Systems 31: Annual Conference on Neural Information Processing Systems 2018, NeurIPS 2018, December 3-8, 2018, Montréal, Canada. 03 December 2018, 525-536
- **DMITRY SENUSHKIN** ; **NIKOLAY PATAKIN** ; **ARSENY KUZNETSOV** ; **ANTON KONUSHIN**. Independent component alignment for multi-task learning. *Proceedings of the IEEE/CVF Conference on Computer Vision and Pattern Recognition (CVPR)*, 2023, 20083-20093
- **GUANGYUAN SHI** ; **QIMAI LI** ; **WENLONG ZHANG** ; **JIAXIN CHEN** ; **XIAO-MING WU**. Recon: Reducing Conflicting Gradients From the Root For Multi-Task Learning. *The Eleventh International Conference on Learning Representations*, 2023
- Multi-task learning for dense prediction tasks: A survey. **SIMON VANDENHENDE** ; **STAMATIOS GEORGOULIS** ; **WOUTER VAN GANSBEKE** ; **MARC PROESMANS** ; **DENGXIN DAI** ; **LUC VAN GOOL**. IEEE transactions on pattern analysis and machine intelligence. IEEE, 2021

- **DERRICK XIN** ; **BEHROOZ GHORBANI** ; **ANKUSH GARG** ; **ORHAN FIRAT** ; **JUSTIN GILMER**. Do current multi-task optimization methods in deep learning even help?. *Advances in Neural Information Processing Systems 35: Annual Conference on Neural Information Processing Systems 2022, NeurIPS 2022, December, virtual*, 2022
- Pad-net: Multi-tasks guided prediction-and-distillation network for simultaneous depth estimation and scene parsing. **DAN XU** ; **WANLI OUYANG** ; **XIAOGANG WANG** ; **NICU SEBE**. 2018 IEEE Conference on Computer Vision and Pattern Recognition, CVPR 2018, Salt Lake City, UT, USA, June 18-22, 2018. IEEE Computer Society, 18 June 2018, 675-684
- **YONGXIN YANG** ; **TIMOTHY M HOSPEDALES**. Trace norm regularised deep multi-task learning. *ArXiv preprint, abs/1606.04038*, 2016
- Gradient surgery for multi-task learning. **TIANHE YU** ; **SAURABH KUMAR** ; **ABHISHEK GUPTA** ; **SERGEY LEVINE** ; **KAROL HAUSMAN** ; **CHELSEA FINN**. Advances in Neural Information Processing Systems 33: Annual Conference on Neural Information Processing Systems 2020, NeurIPS 2020, December 6-12, 2020, virtual. 06 December 2020
- **HINTON, GEOFFREY** ; **VINYALS, ORIOL** ; **DEAN, JEFF**. Distilling the knowledge in a neural network. *arXiv preprint arXiv:1503.02531*, 2015
- Soft-margin softmax for deep classification. **LIANG, XUEZHI et al.** International Conference on Neural Information Processing. Springer International Publishing, 2017, 413-421
- **DE BREBISSON** ; **ALEXANDRE; VINCENT, PASCAL**. An exploration of softmax alternatives belonging to the spherical loss family. *arXiv preprint arXiv:1511.05042*, 2015